# EUROPÄISCHE PATENTANMELDUNG

(11) **EP 3 629 239 A1**
(43) Veröffentlichungstag der Anmeldung: **01.04.2020**
(21) Anmeldenummer: 18196445.3
(22) Anmeldetag: 25.09.2018
(51) Int. Cl.: G06K 9/32, G06K 9/00

(54) **BENUTZERUNTERSTÜTZTES AUTOMATISCHES INFORMATIONSERKENNUNGSVERFAHREN BEI LOGISTIKPROZESSEN**

(71) Anmelder: Siemens Aktiengesellschaft, 80333 München (DE)
(72) Erfinder: SCHAMBACH, Marc-Peter, 78464 Konstanz (DE); VON DER NÜLL, Stephan, Konstanz 78464 (DE)
(74) Vertreter: Maier, Daniel Oliver

(57) **Zusammenfassung**

Die Erfindung betrifft ein benutzerunterstütztes automatisches Informationserkennungsverfahren (1), insbesondere Texterkennungsverfahren (1), bei Logistikprozessen und ein diesbezügliches System (11) zur benutzerunterstützten automatischen Informationserkennung (1), insbesondere Texterkennung (1), bei Logistikprozessen.

Bei dem benutzerunterstützten automatischen Informationserkennungsverfahren (1), insbesondere Texterkennungsverfahren (1), bzw. der benutzerunterstützten automatischen Informationserkennung (1), insbesondere Texterkennung (1), wird für zumindest einen Teil (4) von in einem einem Benutzer anzeigbaren Bild (3) eines Logistikgutes gezeigten Informationen (5), insbesondere (Zustell-)Informationen (5), eine automatische Informationserkennung (2), insbesondere Texterkennung (2), durchgeführt, wobei bei der für den Teil (4) der Informationen (5), insbesondere (Zustell-)Informationen (5), durchgeführten automatischen Informationserkennung (2), insbesondere Texterkennung (2), dem Benutzer zumindest ein Vorschlag (6) für zumindest eine zu erkennende Information (5), insbesondere (Zustell-)Information (5), gemacht wird.

## Beschreibung

Die Erfindung betrifft ein benutzerunterstütztes automatisches Informationserkennungsverfahren, insbesondere Texterkennungsverfahren, bei Logistikprozessen und ein diesbezügliches System zur benutzerunterstützten automatischen Informationserkennung, insbesondere Texterkennung, bei Logistikprozessen.

In https://de.wikipedia.org/wiki/Texterkennung (erhältlich am 11.07.2018) sind Grundlagen einer Texterkennung beschrieben.

Texterkennung (auch meist als optische Zeichenerkennung (kurz "OCR" bzw. optical character recognition) bezeichnet) ist ein Begriff aus der Informationstechnik und bezeichnet eine automatisierte Texterkennung innerhalb von Text aufweisenden Bildern.

Texterkennung ist deshalb notwendig, weil optische Eingabegeräte, wie Scanner oder Digitalkameras, aber auch Faxempfänger, als Ergebnis ausschließlich Rastergrafiken (kurz vereinfacht "(Pixel-)Bilder") liefern können, d. h. Text bzw. Zeichen als in Zeilen und Spalten angeordnete Punkte unterschiedlicher Färbung (Pixel).

Texterkennung bezeichnet dabei die Aufgabe, die (grafisch bzw. bildlich) dargestellten Zeichen eines Textes (in/auf einem Dokument/(Pixel-)Bild) als solche zu erkennen, d. h. zu identifizieren und ihnen - beispielsweise im Falle von Buchstaben - einen Zahlenwert zuzuordnen, der ihnen nach üblicher Textkodierung zukommt (ASCII, Unicode).

Diesbezügliche Mittel für eine Texterkennung sind entsprechende Softwareprogramme, welche die Texterkennung durchführen.

Eine leistungsstarke Weiterentwicklung bei der Texterkennung ist eine solche, welche als maschinell lernendes System konzipiert (EP 3 200 123 A1).

(Automatische) Texterkennung wird auch im Bereich der Logistik und bei dortigen (logistischen bzw. Logistik-)Prozessen eingesetzt.

Logistik stellt einen Wirtschaftszweig oder eine Abteilung in Organisationen, die sich mit der Planung, Steuerung, Optimierung und Durchführung von Güter-, Informations- und Personenströmen befassen, dar. Zu diesen Strömen zählt das Transportieren, Lagern, Umschlagen, Kommissionieren, Sortieren, Verpacken und Verteilen. Bei Stückgütern spricht man vom Materialfluss.

Bei Stückgütern wie Postsendungen bezeichnet man so dann den Logistikzweig als Postlogistik; bei Stückgütern, beispielsweise Gepäckstücke, an Flughäfen wird dieser als Flughafenlogistik bezeichnet.

Postlogistik umfasst so insbesondere das (prozessuale) Konzept, das ein Postdienstleister benutzt, um eine Postsendung schnell, fehlerfrei und kostengünstig vom Absender bis zum Empfänger zu transportieren. Das prozessuale Konzept im Postmarkt teilt sich meist in (die) drei Bereiche:
1. das Einsammeln von Postsendungen, wie Briefe, Pakete o. Ä., über Briefkästen, Filialen oder Abholdienste,
2. die Beförderung der Postsendungen in die Region der Zustellung und
3. die Zustellung bis zum Empfänger, die auch häufig als "die letzte Meile" bezeichnet wird.

Damit eine Postsendung, die - beispielsweise hier in Deutschland - bei einem Postdienstleister aufgegeben wurde, in die richtige Zustellregion befördert wird, entnimmt das Sortierzentrum des Postdienstleisters zunächst einem auf der Postsendung angebrachten/vorhandenen Anschriften-/Adressfeld (Zustell-)Informationen, wie beispielsweise Ländercodes, Ländernamen, Städtecodes, Städtenamen, Straßennamen, Hausnummern u. Ä..

Dazu "lesen" automatische Sortiermaschinen - unter Verwendung von automatischer Texterkennung - das ((pixel-)bildlich erfasste) Anschriften-/Adressfeld (das heißt, es wird (automatisch mittels optischer Systeme) ein (Pixel-)Bild der Postsendung mit dessen Anschriften-/Adressfeld erstellt) - hier in der Regel von unten nach oben vom Ländercode/Ländernamen bis zum Straßennamen - und übertragen die "gelesenen" bzw. mittels der Texterkennung verarbeiteten (Zustell-)Informationen mit einer eigenen kodierten Maschinenschrift ("Maschinenkode") auf die Postsendung ("Sendungskodierung").

Im Sortierzentrum des Sendungszentrums der Zustellregion brauchen die dortigen Sortiermaschinen nur noch die kodierte Maschinenschrift/Maschinenkode bzw. die kodierte (Zustell-) Information lesen (, was in der Regel wiederum automatisch mittels Texterkennung erfolgt), um die Postendung dem richtigen Zustellbezirk zuzuordnen und ihn danach in die richtige Gangfolge des Zustellers zu sortieren.

Entsprechendes gilt auch für die Flughafenlogistik (und dortigen Prozessen) bei dortigen Gepäcksortieranlagen, wo ebenfalls die an den Gepäckstücken angebrachten Gepäckinformationen automatisch - unter Verwendung von automatischer Texterkennung - "gelesen" werden.

Für einen bestimmten Prozentsatz können - bei der automatischen Texterkennung - nicht alle (Zustell-)Informationen des bzw. im Anschriften-/Adressfeld eines logistischen Gutes, wie der Postsendung oder dem Gepäckstück, bzw. dessen Bild erkannt bzw. gelesen werden.

In diesen Fällen "nicht erkannter/gelesener" (Zustell-)Informationen von logistischen Gütern werden diese dann "manuell" durch einen Benutzer, d. h. eine Kodierkraft, wie eine Postsendungs-Kodierkraft, (nach-)bearbeitet.

Eine solche Kodierkraft gibt - für das durch die automatische Texterkennung "nicht erkannte logistische Gut" - die Adressregion auf dessen Bild "manuell" vor (das heißt, hier wird der Kodierkraft an "ihrem" Kodier-Arbeitsplatz das Bild des logistischen Gutes mittels eines Anzeigegeräts, beispielsweise eines Bildschirms, angezeigt, in welchem bzw. auf welchem Bild sie dann die Adressregion vorgibt) und ein sogenannter OCR-/Texterkennungs-Retry-Leseschritt versucht dann die (Zustell-)Informationen im Anschriften-/Adressfeld mit Hilfe der "manuell" vorgegebenen Adressregion doch noch automatisch zu lesen.

Dieser OCR-Retry-Leseschritt "funktioniert" auch nur bedingt, das heißt, auch hier werden für einen bestimmten Prozentsatz solcher manuell nachbearbeiteter logistischer Güter nicht alle (Zustell-)Informationen im jeweiligen Anschriften-/Adressfeld bzw. dessen Bild erkannt bzw. gelesen. Insbesondere dann, wenn die (Zustell-)Informationen, wie Adressangaben, nicht nach üblicher Norm geschrieben sind, beispielsweise, wenn, wie gelegentlich bei kleinen Paketen aus Asien, eine Adresse/Anschrift in einer Zeile geschrieben wurde oder ein Straßenname und ein Ortsname vertauscht wurden oder ein Postcode an einer ganz anderen Stelle steht etc..

Um die Lese- bzw. Erkennungsleistung dieser automatischen Texterkennungssysteme bei den Logistikprozessen weiter zu erhöhen, werden diese als (maschinell) lernende Systeme konfiguriert, beispielsweise auf Basis eines rekurrenten neuronalen Netzes (EP 3 200 123 A1).

Solche "lernenden" Texterkennungssysteme müssen dann in einer Trainingsphase/Lernphase - auf ihre Erkennungs-/Leseaufgabe hin - trainiert werden, um dann "im Einsatz" ihre Lese- bzw. Erkennungsaufgabe erfüllen und ihre Lese- bzw. Erkennungsleistung erbringen zu können.

Bei einem solchen Training lernt das "lernende" Texterkennungssystem aus Beispielen bzw. Lerndaten und kann diese nach Beendigung der Lernphase verallgemeinern. Das heißt, es werden nicht einfach die Beispiele auswendig gelernt, sondern es "erkennt" Muster und Gesetzmäßigkeiten in den Lerndaten. So kann das System auch unbekannte Daten beurteilen (Lerntransfer), das heißt, hier (Zustell-)Informationen in Anschriften-/Adressfeldern von Logistikgütern lesen/erkennen.

In der Regel ist es zweckmäßig, wenn eine große Anzahl von Beispielen/Lern-/Trainingsdaten zur Verfügung stehen, um so das "lernende" Texterkennungssystem möglichst gut trainieren zu können.

Eine Möglichkeit, um solche Beispiele/Lern-/Trainingsdaten zu generieren, ist es, Bildern von Logistikgütern - zeigend deren Anschriften-/Adressfelder mit dortigen (Zustell-)Informationen - diese (Zustell-)Informationen "manuell" (durch einen Benutzer) dem jeweiligen Bild mit den dortigen (Zustell-) Informationen bzw. dem jeweiligen Anschriften-/Adressfeld mit den dortigen (Zustell-)Informationen zuzuordnen ("ground truth data").

Dieser Prozess zur Generierung solcher - authentischen (d. h. richtig erkannten) - Beispiele/Lern-/Trainingsdaten bzw. "ground truth data" (für das Training von "logistischen, lernenden Texterkennungssystemen") ist aufwändig, erfordert einen hohen Zeitaufwand, bindet Rescourcen und ist teuer.

Aufgabe der Erfindung ist es, Nachteile im Stand der Technik, insbesondere bei Logistikprozessen, im Speziellen bei Prozessen bei der Post- und Flughafenlogistik, d. h. insbesondere bei dortiger Postsendungsverteilung/Gepäckverteilung, zu verbessern.

Insbesondere ist es eine Aufgabe der Erfindung, die Logistikprozesse, wie im Speziellen Prozesse bei der Post- und Flughafenlogistik bzw. die dortige Postsendungsverteilung/Gepäckverteilung, insbesondere dortig verwendete Texterkennungssysteme, schneller, sicherer und zuverlässiger zu machen.

Diese Aufgabe wird gelöst durch ein benutzerunterstütztes automatisches Informationserkennungsverfahren, insbesondere Texterkennungsverfahren, bei Logistikprozessen
und ein diesbezügliches System zur benutzerunterstützten automatischen Informationserkennung, insbesondere Texterkennung, bei Logistikprozessen mit den Merkmalen des jeweiligen unabhängigen Anspruchs. Weiterbildungen ergeben sich auch aus den abhängigen Ansprüchen und beziehen sich auf das Verfahren wie auch auf das System (beides vereinfacht auch nur als "benutzerunterstützte (automatische) Texterkennung" bezeichnet).

Nach dem benutzerunterstützten automatischen Informationserkennungsverfahren, insbesondere Texterkennungsverfahren, bei Logistikprozessen, wie insbesondere einer Postlogistik oder einer Flughafenlogistik, ist vorgesehen, dass für zumindest einen Teil von - in einem einem Benutzer anzeigbaren Bild, d. h. insbesondere einem Rastergrafikbild bzw. Pixelbild, insbesondere eines Logistikgutes (auch kurz nur "Logistikbild"), beispielsweise zeigend eine Postsendung, wie einen Brief oder ein Paket, oder ein Gepäckstück, wie einen Koffer oder eine Tasche, gezeigten - Informationen, insbesondere (Zustell-)Informationen, eine automatische Informationserkennung, insbesondere eine Texterkennung, durchgeführt wird, wobei bei der für den Teil der Informationen bzw. (Zustell-)Informationen durchgeführten automatischen Informationserkennung bzw. Texterkennung dem Benutzer zumindest ein Vorschlag für zumindest eine zu erkennende Information bzw. (Zustell-)Information gemacht wird.

Der Teil der Informationen bzw. (Zustell-)Informationen, für welchen die automatische Informationserkennung bzw. Texterkennung durchgeführt wird, kann beispielsweise eine, zwei oder auch mehrere (Zustell-)Informationen sein - oder auch nur ein Bestandteil einer (Zustell-)Information, wie ein (Wort-)Anfang oder -ende bei einer (Zustell-)Information - oder auch nur eine Ziffer- oder Buchstabenfolge bzw. einzelne Ziffern und/oder Buchstaben bei einer oder mehrerer (Zustell-)Information/-en. Auch kann der Teil der (Zustell-) Informationen, für welche die automatische Texterkennung durchgeführt wird, alle im Bild gezeigten (Zustell-)Informationen sein.

Die (Zustell-)Information kann beispielsweise ein Stadtcode, ein Landescode, eine Postleitzahl, ein Stadtname, ein Stra-βenname, eine Hausnummer und/oder einen Personen-/Empfängername sein; das Logistikgut kann eine Postsendung, insbesondere ein Brief oder ein Paket, oder ein Gepäckstück, insbesondere ein Koffer oder eine Tasche, sein.

Auch kann der Teil der Informationen, für welchen die automatische Informationserkennung, durchgeführt wird, ein (Bild-)Objekt, wie beispielsweise eine Briefmarke oder ein Barcode oder eine Struktur, sein. Hier ist es insbesondere zweckmä-βig, wenn die automatische Informationserkennung eine Objekterkennung ist.

Insbesondere zweckmäßig - gerade für die Benutzerunterstützung - ist es, wenn der Teil von den Informationen bzw. (Zustell-)Informationen, für welchen die automatische Informationserkennung bzw. Texterkennung durchgeführt wird, und/oder das Bild (, welches zumindest den Teil von den Informationen bzw. (Zustell-)Informationen, für welchen die automatische Informationserkennung bzw. Texterkennung durchgeführt wird, oder die Informationen bzw. (Zustell-)Informationen zeigt) und/oder der Vorschlag dann auch dem Benutzer angezeigt werden/wird.

Für die Benutzerunterstützung kann insbesondere eine Benutzerschnittstelle ("UI") - für eine Handlung eines Benutzers - vorgesehen sein. Dies kann beispielsweise ein Annehmen (bzw. auch ein Teilannehmen) des Vorschlags - oder auch ein Ablehnen (bzw. auch ein Teilablehnen) und/oder das Machen eines Gegenvorschlags - sein. Auch ein Auswählen des Teils von den Informationen bzw. (Zustell-)Informationen, für welchen die automatische Informationserkennung bzw. Texterkennung durchgeführt wird bzw. werden soll, aus Informationen bzw. (Zustell-)Informationen und/oder des Bildes (, welches zumindest den Teil von den Informationen bzw. (Zustell-)Informationen, für welchen die automatische Informationserkennung bzw. Texterkennung durchgeführt wird bzw. durchgeführt werden soll, oder die Informationen bzw. (Zustell-)Informationen zeigt) aus Bildern kann über eine bzw. unter Verwendung einer Benutzerschnittstelle durchgeführt werden.

Das System zur benutzerunterstützten automatischen Informationserkennung bzw. Texterkennung bei Logistikprozessen sieht eine automatische Informationserkennung, insbesondere Texterkennung, durchführbar bei einem Bild, d. h. ein Mittel zur Durchführung einer automatischen Informationserkennung, insbesondere Texterkennung, wie eine Texterkennungs-/OCR-Software, vor.

Ferner weist das System ein Systemmittel zur Durchführung einer benutzerunterstützten automatischen Informationserkennung, insbesondere Texterkennung, bzw. des benutzerunterstützten automatischen Informationserkennungsverfahren , insbesondere Texterkennungsverfahrens, bei Logistikprozessen auf.

Dieses Systemmittel ist dazu derart eingerichtet, dass für zumindest einen Teil von in einem einem Benutzer anzeigbaren Bild, insbesondere eines Logistikgutes, gezeigten Informationen, insbesondere (Zustell-) Informationen (oder Objekte), eine automatische Informationserkennung, insbesondere Texterkennung, durchgeführt wird, wobei bei der für den Teil der Informationen bzw. (Zustell-)Informationen durchgeführten automatischen Informationserkennung bzw. Texterkennung dem Benutzer zumindest ein Vorschlag für zumindest eine zu erkennende Information bzw. (Zustell-)Information gemacht wird.

Für die Benutzerunterstützung kann insbesondere eine Benutzerschnittstelle ("UI") - für eine Handlung eines Benutzers - vorgesehen sein. Dies kann beispielsweise ein Annehmen (bzw. auch ein Teilannehmen) des Vorschlags - oder auch ein Ablehnen (bzw. auch ein Teilablehnen) und/oder das Machen eines Gegenvorschlags - sein. Auch ein Auswählen des Teils von den Informationen bzw. (Zustell-)Informationen, für welchen die automatische Informationserkennung bzw. Texterkennung durchgeführt wird bzw. werden soll, aus Informationen bzw. (Zustell-) Informationen und/oder des Bildes (, welches zumindest den Teil von den Informationen bzw. (Zustell-)Informationen, für welchen die automatische Informationserkennung bzw. Texterkennung durchgeführt wird bzw. durchgeführt werden soll, oder die Informationen bzw. (Zustell-)Informationen zeigt) aus Bildern kann über eine bzw. unter Verwendung einer Benutzerschnittstelle durchgeführt werden.

Insbesondere zweckmäßig ist auch hier - gerade für die Benutzerunterstützung -, wenn der Teil von den Informationen bzw. (Zustell-)Informationen, für welchen die automatische Informationserkennung bzw. Texterkennung durchgeführt wird, und/oder das Bild (, welches zumindest den Teil von den Informationen bzw. (Zustell-)Informationen, für welchen die automatische Informationserkennung bzw. Texterkennung durchgeführt wird, oder die Informationen bzw. (Zustell-)Informationen zeigt) und/oder der Vorschlag auf einem Anzeigemittel dann auch dem Benutzer angezeigt wird.

Dazu ist es dann zweckmäßig, wenn das System ein solches Anzeigemittel zum Anzeigen eines Bildes, insbesondere des Bildes, für welches die automatische Informationserkennung bzw. Texterkennung durchführbar ist, aufweist, beispielsweise einen (Computer-)Bildschirm.

Vereinfacht und anschaulich ausgedrückt, die benutzerunterstützte automatische Informationserkennung, insbesondere Texterkennung, bzw. das Verfahren und das System sieht bzw. sehen vor, dass bei bzw. im Rahmen einer automatischen Informationserkennung bzw. Texterkennung von - hier - Informationen bzw. (Zustell-)Informationen bei Logistikprozessen/Logistikgütern (automatisch) ein Vorschlag (oder gegebenenfalls auch mehrere Vorschläge) für eine zu erkennende - hier - Information bzw. (Zustell-)Information - generiert wird.

Ein Benutzer, welchem dieser Vorschlag bzw. diese Vorschläge angezeigt werden kann bzw. können, kann dann den bzw. einen der Vorschläge annehmen, wodurch dann dieser Vorschlag als erkannt gilt ("fixiert", "confirmed") und als erkannte Information bzw. (Zustell-)Information weiterverwendet wird.

Auf diese Weise lassen sich - einfach, effektiv, effizient und auf schnelle und kostensparende Weise - (genügend) viele, authentische Daten/Beispiele/Lern-/Trainingsdaten bzw. "ground truth data" insbesondere für das Training von "logistischen, lernenden Informations- bzw. Texterkennungssystemen" generieren -, welche wiederum, werden sie für das Training des "logistischen, lernenden Informations- bzw. Texterkennungssystems" eingesetzt, so zu einem leistungsfähigen - und zuverlässig erkennenden Informations- bzw. Texterkennungssystem bzw. Informations- bzw. Texterkennung - hier - bei Logistikprozessen führen.

Insbesondere die vorgesehene Kombination bzw. das vorgesehene Zusammenspiel von automatischer Informationserkennung, insbesondere Texterkennung, (hier wird der bzw. werden die Vorschläge generiert) und benutzerunterstütztem Auswählen (hier wird dann der bzw. einer der Vorschläge ausgewählt und so als richtig erkannter (authentischer) "Treffer" fixiert), führt zu einem effizienten und effektiven Generieren von - authentischen - Beispielen/Lern-/Trainingsdaten, unterliegen die fixierten Vorschläge nicht mehr einer automatischen Fehlerkennung (das heißt, sie sind authentisch) und sind schneller generierbar als durch ein reines (vorschlagfreies) "manuelles" Eingeben durch einen Benutzer.

Gerade ein mehrfaches Zusammenspiel, bei dem jedes Mal ein oder mehrere Vorschläge (automatisch) generiert - und ein oder mehrere Vorschläge (durch den Benutzer) ausgewählt bzw. fixiert werden, insbesondere dann auch, wenn bereits fixierte Vorschläge (aus einem Vordurchgang/-lauf) bei der Generierung von einem oder mehreren Vorschlägen (im nachfolgenden Durchgang/-lauf) berücksichtigt werden (- und so die (nachfolgenden) Vorschläge "treffsicherer" gemacht werden können ("Abhängigkeiten untereinander bei einzelnen (Zustell-)Informationen)), kann so - in effizienter und effektiver Weise - zu (einer Vielzahl von) - authentischen - Beispielen/Lern-/Trainingsdaten führen.

Kurz anders ausgedrückt, die benutzerunterstützte automatische Informationserkennung bzw. Texterkennung bzw. das Verfahren und/oder das System können/kann eingesetzt bzw. verwendet werden für die Generierung von Trainingsdaten ("ground truth data") für eine lernende Informations- bzw. Texterkennung, d. h. das "logistische, lernende Informations- bzw. Texterkennungssystem", wobei ein von dem Benutzer ausgewählter Vorschlag ein Teil eines Trainingsdatums ist.

Kurz auch, mit dem Verfahren und dem System lassen sich so leistungsstarke, zuverlässige "logistische Informationserkennungs- bzw. Texterkennungssysteme", d. h. die "logistischen, lernenden Informations- bzw. Texterkennungssysteme", "herstellen" bzw. implementieren (das heißt, diese werden mit den Beispielen/Lern-/Trainingsdaten aus dem Verfahren und dem System trainiert), welche - im Einsatz - dort dann die Logistikprozesse, wie im Speziellen Prozesse bei der Post- und Flughafenlogistik bzw. die dortige Postsendungsverteilung/Gepäckverteilung, schneller, sicherer und zuverlässiger machen.

Dabei kann auch die für den Teil der Informationen bzw. (Zustell-)Informationen durchgeführte automatische Informations- bzw. Texterkennung eine lernende automatische Informations- bzw. Texterkennung, d. h. eine Informations- bzw. Texterkennung, welche Mittel eines maschinellen Lernens aufweist, sein.

Zweckmäßigerweise kann bzw. sollte aber die für den Teil der Informationen bzw. (Zustell-)Informationen durchgeführte automatische Informations- bzw. Texterkennung eine andere sein, d. h. insbesondere auf anderen Algorithmen basieren, als diejenige, welche dann mit den Trainingsdaten trainiert wird, d. h. die "logistischen, lernenden Informations- bzw. Texterkennungssysteme". So können nämlich dann auch die durch das Verfahren und das System generierten Beispiele/Lern-/Trainingsdaten für ein "Vermessen" der "logistischen, lernenden Informations- bzw. Texterkennungssysteme" herangezogen werden.

Zweckmäßigerweise kann der Teil von den Informationen bzw. (Zustell-)Informationen, für welchen die automatische Informations- bzw. Texterkennung durchgeführt wird, automatisch ausgewählt werden. Das heißt, die automatische Informations- bzw. Texterkennung wählt selbstständig/automatisch im Bild, welches die Informationen bzw. (Zustell-)Informationen zeigt, den Teil von den Informationen bzw. (Zustell-)Informationen aus, für welchen die automatische Informations- bzw. Texterkennung durchgeführt wird.

Alternativ - oder auch ergänzend (als Benutzereingriff) - kann die Auswahl des Teils von den Informationen bzw. (Zustell-)Informationen, für welchen die automatische Informationserkennung bzw. Texterkennung durchgeführt wird, auch von dem Benutzer ausgewählt werden - oder (, hat die automatische Informations- bzw. Texterkennung eine Vorauswahl getroffen, diese) angepasst werden ("Regon Of Interest (ROI)"). Hier ist es dann insbesondere zweckmäßig, wenn dem Benutzer das Bild oder der Teil von den Informationen bzw. (Zustell-)Informationen, für welchen die automatische Informations- bzw. Texterkennung durchgeführt wird, angezeigt wird.

Weiterhin kann es zweckmäßig sein, dass das Bild und/oder der Teil von den Informationen bzw. (Zustell-)Informationen, für welche die automatische Informations- bzw. Texterkennung durchgeführt wird, dem Benutzer angezeigt werden/wird. Dabei bzw. in dem Angezeigten kann dann der Teil von den Informationen bzw. (Zustell-)Informationen, für welche die automatische Informations- bzw. Texterkennung durchgeführt wird, zumindest teilweise markiert werden, insbesondere unter Verwendung einer Farbmarkierung und/oder eines Rahmens markiert werden, ("ROI"), insbesondere von dem Benutzer oder automatisch markiert werden.

Erfolgt die Markierung durch den Benutzer, so kann der Benutzer den Teil von den Informationen bzw. (Zustell-)Informationen, für welche die automatische Informations- bzw. Texterkennung durchgeführt wird, auswählen bzw. festlegen; erfolgt dies automatisch, so kann automatisch der Teil von den Informationen bzw. (Zustell-)Informationen, für welche die automatische Informations- bzw.Texterkennung durchgeführt wird, ausgewählt bzw. festgelegt werden.

Zweckdienlich kann es auch sein, dass für den Teil von den Informationen bzw. (Zustell-)Informationen, für welchen die automatische Informations- bzw. Texterkennung durchgeführt wird, mehrere Vorschläge für zumindest eine zu erkennende Information bzw. (Zustell-)Information und/oder jeweils einen Vorschlag für jeweils eine von mehreren zu erkennenden Informationen bzw. (Zustell-)Informationen gemacht werden/wird. Auch jeweils mehrere Vorschläge für jeweils eine von mehreren zu erkennenden Informationen bzw. (Zustell-)Informationen können gemacht werden.

Zweckmäßig ist es auch, wenn der Vorschlag, insbesondere ein Vorschlag von mehreren Vorschlägen, von dem Benutzer ausgewählt wird, welcher dann als erkannt gilt ("fixiert", "confirmed") und als erkannte Information bzw. (Zustell-)Information von der automatischen Informations- bzw. Texterkennung weiterverwendet wird, oder dass der Vorschlag, insbesondere ein Vorschlag von mehreren Vorschlägen, von dem Benutzer abgelehnt und von dem Benutzer ein Gegenvorschlag gemacht wird, welcher Gegenvorschlag dann als angenommen bzw. erkannt gilt ("fixiert", "confirmed") und als erkannte Information bzw. (Zustell-)Information von der automatischen Informations- bzw. Texterkennung weiterverwendet wird.

Auch kann zweckdienlich sein, dass, wenn der Vorschlag, insbesondere ein Vorschlag von mehreren Vorschlägen, von dem Benutzer ausgewählt worden ist, oder, wenn der Gegenvorschlag von dem Benutzer gemacht worden ist, ein oder mehrere weitere, insbesondere aktualisierte, Vorschläge für zumindest eine zu erkennende Information bzw. (Zustell-)Information gemacht wird/werden, wobei insbesondere der oder zumindest einer der mehreren aktualisierten Vorschläge in Abhängigkeit des von dem Benutzer ausgewählten Vorschlags oder des von dem Benutzer gemachten Gegenvorschlags generiert wird.

Anders ausgedrückt, die Aktualisierung des Vorschlags kann in Abhängigkeit des von dem Benutzer ausgewählten Vorschlags oder des von dem Benutzer gemachten Gegenvorschlags durchgeführt werden.

So kann beispielsweise, wird die benutzerunterstützte automatische Informations- bzw. Texterkennung als schleifenartig, sich wiederholendes Verfahren ausgeführt, der aktualisierte Vorschlag bzw. der zumindest eine der mehreren aktualisierten Vorschläge in einem nachfolgenden Durchlauf zu einem vorangegangenen Durchlauf gemacht wird bzw. erfolgt, in welchem vorangegangenen Durchlauf der Vorschlag bzw. der eine Vorschlag von mehreren Vorschlägen, von dem Benutzer ausgewählt worden ist, oder, wenn der Gegenvorschlag von dem Benutzer gemacht worden ist.

Der bzw. einer oder mehrere von den aktualisierten Vorschlägen können/kann dann auch wieder von dem Benutzer ausgewählt - oder mit einem oder mehreren Gegenvorschlägen "beantwortet" werden.

Daraufhin kann dann wieder eine Aktualisierung von einem oder mehreren Vorschlägen erfolgen u.s.w..

Kurz und vereinfacht, Vorschlag - Annahme/Gegenvorschlag - Aktualisierung/aktualisierter Vorschlag bzw. aktualisierte Vorschläge - Annahme/Gegenvorschlag - Aktualisierung/aktualisierter Vorschlag bzw. aktualisierte Vorschläge u.s.w. können sich iterativ, schleifenartig wiederholen bzw. abwechseln, insbesondere solange, bis alle zu erkennenden Informationen bzw. (Zustell-)Informationen des Bildes erkannt sind.

Auch kann es zweckdienlich sein, dass, wenn mehrere Vorschläge gemacht werden, hier dann auch schon zumindest ein Vorschlag von den mehreren Vorschlägen zumindest auch in Abhängigkeit von mindestens einem anderen von den mehreren Vorschlägen generiert wird.

Die für den Teil der Informationen bzw. (Zustell-)Informationen durchgeführte automatische Informations- bzw. Texterkennung kann auch "abgestimmt" auf einen zu erkennenden Informations- bzw. Textinhalt, wie insbesondere auf den Teil der Informationen bzw. (Zustell-)Informationen, sein, so beispielsweise abgestimmt auf eine zu erkennende/lesende Postleitzahl, Straßennamen, Hausnummer oder Stadtnamen u. Ä. ("spezialisierte Texterkennung").

Dazu kann beispielsweise die automatische Informations- bzw. Texterkennung (jeweils) auf entsprechendes Vorwissen, beispielsweise in Form von "Wörterbüchern" (oder entsprechenden Datenbanken), zurückgreifen bzw. diese verwenden. Hierdurch kann die Erkennungsrate der automatischen Informations- bzw. Texterkennung erheblich erhöht werden.

Es kann auch vorgesehen sein, dass, werden mehrere Vorschläge gemacht, die (mehreren) Vorschläge nach einem vorgebbaren Kriterium sortiert (und so sortiert dem Benutzer angezeigt) werden, beispielsweise nach einer "Trefferwahrscheinlichkeit".

Auch Inkonsistenzen, insbesondere in Bezug auf den Teil von den Informationen bzw. (Zustell-)Informationen, für welchen die automatische Informations- bzw. Texterkennung durchgeführt wird, können bei dem Vorschlag oder , werden mehrere Vorschläge gemacht, bei den Vorschlägen angezeigt/markiert/hervorgehoben werden.

Oder auch eine Vervollständigung des Teils von den Informationen bzw. (Zustell-) Informationen, für welchen die automatische Informations- bzw. Texterkennung durchgeführt wird, zu dem Vorschlag (für eine zu erkennende Information bzw. (Zustell-)Information) kann durchgeführt werden.

Ist so beispielsweise der Teil von den Informationen bzw. (Zustell-)Informationen, für welchen die automatische Informations- bzw. Texterkennung durchgeführt wird, ein Wortanfang einer (Zustell-)Information, wie eines Straßennamens, ist der Vorschlag (für eine zu erkennende (Zustell-)Information) auf den (gesamten/kompletten) Straßennamen gerichtet.

Zweckdienlich kann auch sein, wenn der Benutzer das Bild des Logistikgutes - oder gegebenenfalls mehrere Bilder, für deren jedes dann die benutzerunterstützte automatische Informations- bzw. Texterkennung durchgeführt wird, - auswählt, beispielsweise nach vorgebbaren Kriterien, wie Art des Logistikgutes u. Ä..

Insbesondere zweckmäßig ist es, wenn das benutzerunterstützte automatische Informations- bzw. Texterkennungsverfahren mehrfach hintereinander ausgeführt wird (vgl. oben, "schleifenartig, iterativ, sich wiederholendes Verfahren"), wobei jedes Mal zumindest ein, insbesondere aktualisierter, Vorschlag für zumindest eine zu erkennende Information bzw. (Zustell-)Information gemacht wird, der, insbesondere aktualisierte, Vorschlag der nachfolgenden Durchführung in Abhängigkeit des, insbesondere aktualisierten, Vorschlags der vorangegangenen Durchführung generiert wird ("circular process"/"loop").

Der "circular process"/"loop" kann solange durchgeführt werden, bis alle zu erkennenden Informationen bzw. (Zustell-)Informationen des Bildes erkannt bzw. "fixiert"/"confirmed" sind.

Auch kann vorzugsweise, um die Benutzerunterstützung zu implementieren, eine Benutzerschnittstelle vorgesehen sein, unter Verwendung derer der Benutzer den Vorschlag annehmen oder ablehnen und einen Gegenvorschlag machen kann.

Auch kann ein Datenspeicher vorgesehen sein, in welchen ein von dem Benutzer angenommener Vorschlag speicherbar ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem Verfahren und dem System kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des bzw. der Ausführungsbeispiele der Erfindung, die im Zusammenhang mit den Zeichnungen näher erläutert wird/werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Es zeigen:
- FIG 1: ein Schema zur Durchführung einer benutzerunterstützten automatischen Texterkennung;
- FIG 2: eine erste Schnittstelle bei der benutzerunterstützten automatischen Texterkennung;
- FIG 3: eine zweite Schnittstelle bei der benutzerunterstützten automatischen Texterkennung.

### Benutzerunterstützte automatische Texterkennung (FIGen 1 bis 3)

FIGen 1 bis 3 zeigen verschiedene Darstellungen im Zusammenhang mit einer benutzerunterstützten automatischen Texterkennung 1.

Mittels dieser benutzerunterstützten automatischen Texterkennung 1 (bzw. eines diese ausführenden Systems 11) werden Beispiele/Lern-/Trainingsdaten 8 bzw. "ground truth data" insbesondere für das Training eines "logistischen, lernenden Texterkennungssystems" für Logistikprozesse generiert.

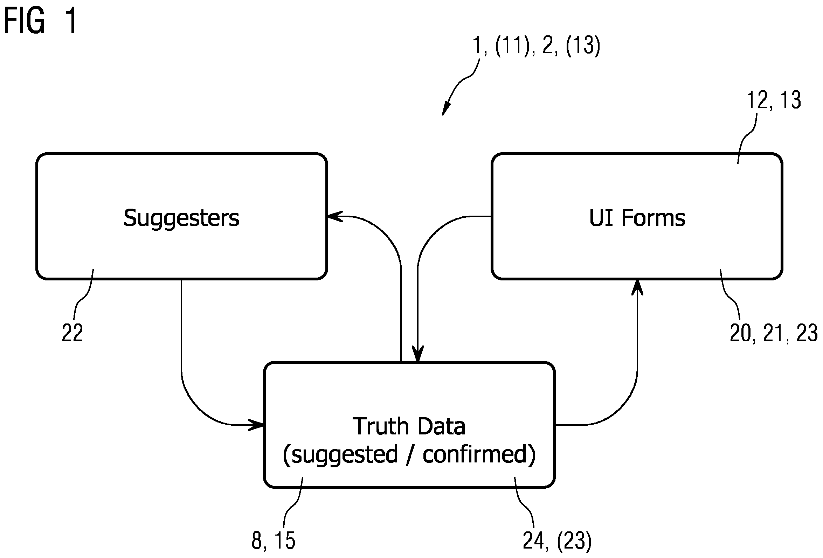

Wie FIG 1 zeigt, erfolgt die benutzerunterstützte automatische Texterkennung 1 als schleifenartiger, wiederholt durchlaufender Prozess ("circular process"/"loop") - mit den wesentlichen, sich gegenseitig beeinflussenden Prozessschritten, "Anzeigen 20 (eines Bildes 3 mit zu erkennenden (Zustell-)Informationen 5) und Auswählen 21" (von zu erkennenden (Zustell-)Informationen 5), "Vorschlagen 22" (von (Zustell-)Informationen 5) und "Bestätigen 23/Fixieren 24" (von (Zustell-)Informationen 5).

FIG 1 verdeutlicht dabei - mit Pfeilen zwischen die Prozessschritte repräsentierenden Prozessblöcken - die Abhängigkeiten (und Abfolgen) der Prozessschritte.

Zur Durchführung dieser benutzerunterstützten automatischen Texterkennung 1 bzw. der Prozessschritte, ist das System 11, d. h. - in diesem Fall - eine (entsprechend programmierte) Systemsoftware 13 (mit deren wesentlichem Bestandteil einer OCR) mit einem Datenspeicher 15 sowie (verschiedene) Benutzerschnittstellen 14 ("UI") (vgl. FIGen 2 und 3), mittels welcher ein Benutzer über den Bildschirm 12 den Prozess bedienen kann, vorgesehen.

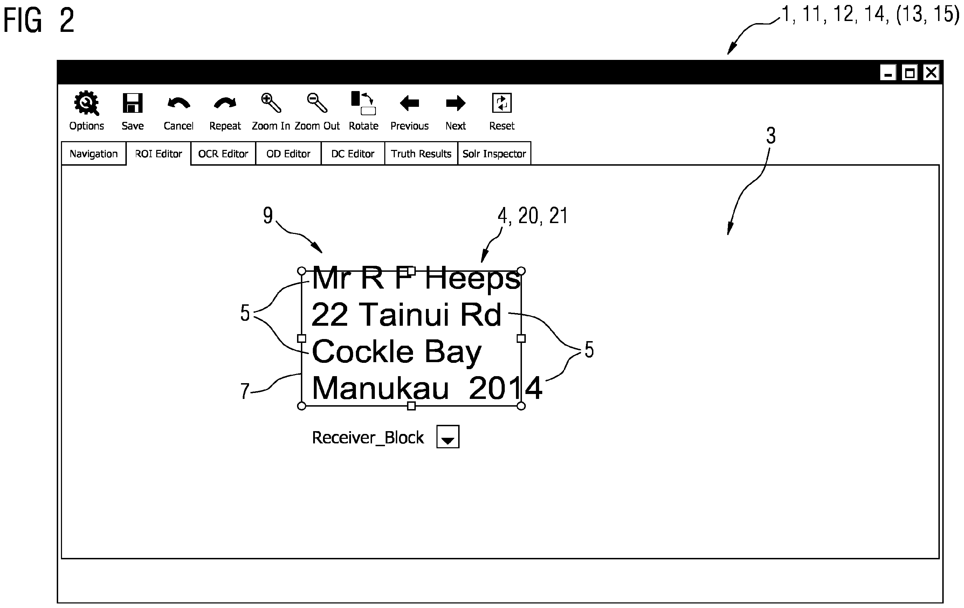

### "Anzeigen 20 und Auswählen 21" (FIG 2)

Bei dem Prozess bzw. der benutzerunterstützten automatischen Texterkennung 1 erfolgt zunächst eine Auswahl 21 von zu erkennenden (Zustell-)Informationen 5 (, welche dann - sind sie erkannt - als Beispiele/Lern-/Trainingsdaten 8 dienen).

Dazu wählt ein Benutzer - aus verschiedenen Bildern, welche jeweils (Zustell-)Informationen 5 zeigen, beispielsweise in Form von Adressfeldern bzw. Adressfeldinformationen auf einem Logistikgut, wie einem Brief, - ein Bild 3 aus (nicht gezeigt), welches ihm dann - über eine Benutzerschnittstelle 14 (FIG 2) angezeigt wird 20.

Wie FIG 2 zeigt, wurde hier von einem Benutzer ein Adressfeld (bzw. ein Bild 3 zeigend das Adressfeld) mit einer Empfängeranschrift 9 ausgewählt, was ihm, wie FIG 2 zeigt, (auf dem Bildschirm 12 bzw. über die Benutzerschnittstelle 14) angezeigt wird.

Die Empfängeranschrift 9 umfasst - in diesem Fall - einen Empfängernamen ("Mr R F Heeps"), eine Hausnummer ("22"), eine Straße/einen Straßennamen ("Tainui Rd"), einen Bezirk/-snamen ("Cockle Bay"), einen Stadtnamen ("Manukau") sowie einen Stadtcode ("2014") - allesamt (Zustell-)Informationen 5.

Der Benutzer markiert (7) nun (und wählt dadurch aus 21) - über die Benutzerschnittstelle (FIG 2) - im angezeigten Bild 3 diejenigen (Zustell-)Informationen 5 (4), für welche - seitens des Prozesses bzw. der benutzerunterstützten automatischen Texterkennung 1 - eine automatische Texterkennung 2 durchgeführt werden soll.

Das Markieren (7) des Teils 4 von (Zustell-)Informationen 5, für welche er die automatische Texterkennung 2 durchgeführt haben möchte (in diesem Fall alle im (angezeigten) Bild 3 gezeigten (Zustell-)Informationen 5), seitens des Benutzers erfolgt, wie FIG 2 verdeutlicht, dadurch, dass der Benutzer einen Rahmen 7 um diejenigen (Zustell-)Informationen 5 (4) legt, für welche er die automatische Texterkennung 2 durchgeführt haben möchte.

Wie FIG 2 zeigt, wurden - in diesem Fall - alle (über die Benutzerschnittstelle 14 dem Benutzer gezeigten Bild 3) gezeigten (Zustell-Informationen 5 (4) von dem Benutzer "umrandet" (7) und so ausgewählt, d. h. - in diesem Fall - der Empfängername ("Mr R F Heeps"), die Hausnummer ("22"), die Straße/der Straßenname ("Tainui Rd"), der Bezirk/-snamen ("Cockle Bay"), der Stadtname ("Manukau") sowie der Stadtcode ("2014").

Dabei ist es für den Prozess bzw. der benutzerunterstützten automatischen Texterkennung 1 im Weiteren unschädlich, werden, wie FIG 2 auch zeigt, durch die Markierung/Rahmen 7 kleinere bzw. einzelne Bestandteile einer (Zustell-)Information 5 nicht erfasst, wie hier die letzte Ziffer "4" des Stadtcodes "2014".

Der Prozess bzw. das System 11 entscheidet selbstständig, ob ein nichterfasster Bestandteil einer (Zustell-)Information 5 mit als zur (Zustell-)Information 5 gehörig mit- und weiterberücksichtigt werden soll - oder ob der nichterfasste Bestandteil als nicht zu berücksichtigende (selbständige) (Zustell-)Information 5 "außen vor gelassen werden soll".

In diesem hier behandelten Fall wurde vom System 11 der nichterfasste Bestandteil der (Zustell-)Information 5, d. h. hier "4" von "2014", als Bestandteil des Stadtcodes - und so zu diesem gehörig beschieden.

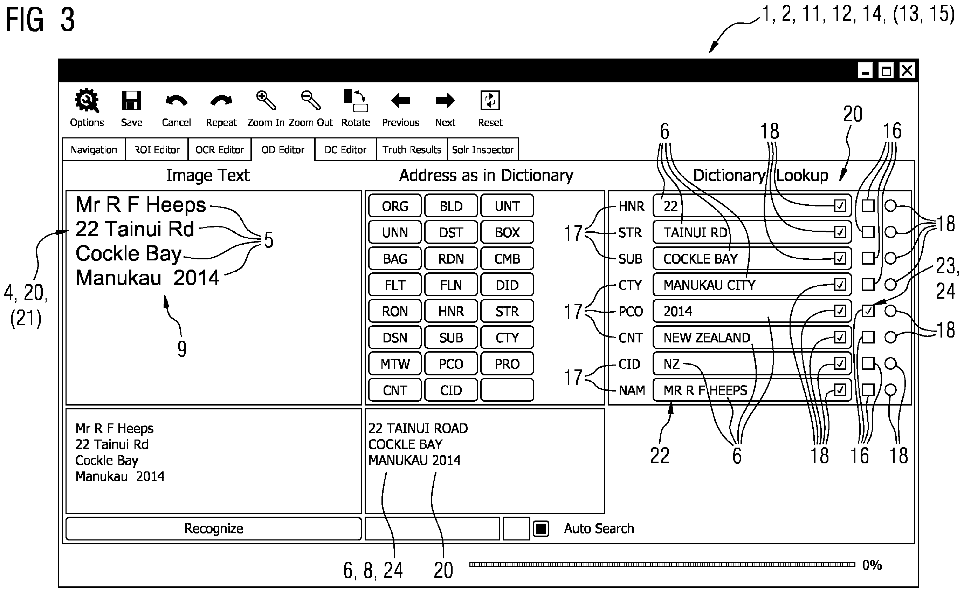

Ist nun durch den Benutzer der Teil 4 von (Zustell-)Informationen 5, für welche er die automatische Texterkennung 2 durchgeführt haben möchte (in diesem Fall alle im (angezeigten) Bild 3 gezeigten (Zustell-)Informationen 5 (d. h. die komplette Empfängeranschrift 9) ausgewählt und festgelegt, so gibt das System 11 "feedback", indem es dem Benutzer - über eine weitere Benutzerschnittstelle 14 (FIG 3) - diese Auswahl 5, 4 nochmals im Gesamten anzeigt 20 (vgl. FIG 3, komplett angezeigte Empfängeranschrift 9 (aus Bild 3)).

### "Vorschlagen 22" (FIG 3)

Ist nun durch den Benutzer der Teil 4 von (Zustell-)Informationen 5, für welche er die automatische Texterkennung 2 durchgeführt haben möchte (in diesem Fall alle im (angezeigten) Bild 3 gezeigten (Zustell-)Informationen 5) ausgewählt und festgelegt, so wird weiter vom System 11 für diese 5, 4 eine automatische Texterkennung 2 durchgeführt.

Das System 11 versucht die einzelnen (Zustell-)Informationen 5 - als solche (einzelnen) - (separat) zu lesen/zu erkennen, wobei es für jede zu lesende/zu erkennende (Zustell-)Information 5 zumindest einen "wahrscheinlichsten" Treffer bzw./als Vorschlag 6 generiert und diese dem Benutzer als Vorschläge 6 unterbreitet 22.

Dabei vergibt das System 11 auch jeder einzelnen (Zustell-)Information 5, welche es zu erkennen versucht (bzw. als solche erkannt hat), einen (internen) Code 17, welcher die Art der zu erkennenden (Zustell-)Information 5 klassifizieren soll, beispielsweise der Code "NAM" für einen Empfängernamen, der Code "HNR" für die Hausnummer, der Code "STR" für die Straße/den Straßennamen, der Code "SUB" für den Bezirk/- snamen, der Code "CTY" für den Stadtnamen sowie der Code "PCO" für den Stadtcode ("2014").

Weiter werden dann , wie FIG 3 zeigt, dem Benutzer über die weitere Benutzerschnittstelle 14 (zusätzlich zur dortig angezeigten Auswahl 4 der zu erkennenden (Zustell-)Informationen 5 (hier komplette Empfängeranschrift 9)) die einzelnen - zunächst nur die wahrscheinlichsten - Vorschläge 6 (zu den zu erkennenden (Zustell-)Informationen 5) mit ihren Codes 17 angezeigt 20.

Dies erfolgt, wie FIG 3 zeigt, dadurch, dass die weitere Benutzerschnittstelle 14 die einzelnen, wahrscheinlichsten Vorschläge 6 (zu den zu erkennenden (Zustell-)Informationen 5) mit ihren Codes 17 listet.

Über eine Schaltfläche 18 jeweils neben dem wahrscheinlichsten Vorschlag 6 lässt sich (vom Benutzer) eine Liste öffnen, welche die jeweils weiteren (weniger wahrscheinlichen) Vorschläge 6 des Systems 11 zu der jeweiligen zu erkennenden (Zustell-)Information 6 listet (nicht gezeigt).

In dieser jeweiligen Liste kann dann der Benutzer einen anderen als den wahrscheinlichsten Vorschlag 6 für eine zu erkennende (Zustell-)Information 6 auswählen, welche dann - wie zuvor der wahrscheinlichste Vorschlag 6 - entsprechend eingeblendet/angezeigt wird 20.

Der ersetzte, vormals wahrscheinlichste Vorschlag 6 "rückt" in die (jeweilige) Liste.

Bei der Vorschlagsgenerierung greift das System 11 auf "Vorwissen", beispielsweise aus Adressdatenbanken, Städte-/Länderlisten u. Ä., zurück, korreliert diese gegebenenfalls und berücksichtigt dabei auch Abhängigkeiten einzelner (Zustell-)Informationen 6 untereinander.

Weiß so beispielsweise das System 11, dass "Stadtcode" und "Stadtname", wie vom System 11 zunächst als (wahrscheinlicher Vorschlag 6) erkannt vermutet, nicht miteinander korrelieren bzw. "nicht zueinander passen", so generiert das System 11 - beispielsweise für eine der beiden (Zustell-)Informationen 6, "Stadtcode" und "Stadtname", dann einen anderen (wahrscheinlichsten und als solchen anzuzeigenden) Vorschlag 6. Der "inkonsistente" Vorschlag 6 "rückt" in die (jeweilige) Liste.

Solche Inkonsistenzen zwischen Vorschlägen 6 können vom System 11 dann auch im entsprechenden bzw. in den entsprechenden Vorschlägen 6 markiert werden.

Darüber hinaus kann das System 11, wie FIG 3 auch zeigt, zusätzliche (Zustell-)Informationen 5 zu der Auswahl 4, 5 generieren (d. h. die Auswahl 4, 5 diesbezüglich ergänzen/vervollständigen), für diese 4, 5 ebenfalls Vorschläge 6 generieren - und diese entsprechend Obigem - zusammen mit einem entsprechenden dazu vergebenden Klassifikationscode 17 über die weitere Benutzerschnittstelle 14 listen/anzeigen 20.

Wie FIG 3 zeigt, wurde in diesem Fall von dem System 11 die weiteren (Zustell-)Informationen 5 "Ländername" (Code "CNT") und "Ländercode" (Code "CID") ergänzt, dazu (wahrscheinlichste/Listen-)Vorschläge generiert und gelistet.

### "Bestätigen 23/Fixieren 24" (FIG 3)

Neben jedem (angezeigten, wahrscheinlichsten) Vorschlag 6 wird ein Kästchen 16 - über die weitere Benutzerschnittstelle 14 - eingeblendet, in welches der Benutzer einen Hacken setzen kann, wodurch dann der jeweilige - (aktuell) angezeigte - Vorschlag 6 als angenommen - und als erkannte (Zustell-)Information 5 gilt 23.

Bestätigte 23/fixierte 24 - und als erkannt geltende - (Zustell-)Informationen 6 (diese werden dann Teil der Beispiele/Lern-/Trainingsdaten 8 und als solche in dem Datenspeicher 15 gespeichert) werden von System 11 (über diese weitere Benutzerschnittstelle 14) auch, wie FIG 3 zeigt, - als "Systemfeedback" angezeigt 20.

Möchte der Benutzer keinen der zu einer zu erkennenden (Zustell-)Information 6 (vom System 11) gemachten Vorschläge 6 annehmen (d. h. weder den wahrscheinlichsten 6, noch einen 6 aus der Liste), so kann vom Benutzer - für bzw. zu einer zu erkennenden (Zustell-)Information 6 - ein Gegenvorschlag 6 gemacht bzw. eingegeben werden.

Dazu stellt, wie FIG 3 auch zeigt, die weitere Benutzerstelle 14 weitere, jeweils neben dem jeweiligen, angezeigten (wahrscheinlichsten) Vorschlag 6 angeordnete Schaltflächen 18 zur Verfügung, bei deren Betätigung sich eine Eingabezeile öffnet (nicht gezeigt), in welche der Benutzer seinen Gegenvorschlag 6 für eine zu erkennende (Zustell-)Information 5 eingeben kann.

Nach Eingabe eines solchen (benutzerseitigen) Gegenvorschlags 6 für eine zu erkennende (Zustell-)Information 5 wird dieser 6 dann - wie zuvor der wahrscheinlichste (systemgenerierte) Vorschlag 6 - entsprechend eingeblendet/angezeigt 20.

Über das entsprechende Kästchen 16 bzw. den dort platzier-/setzbaren Haken kann dann entsprechend Vorherigem der jeweilige - (aktuell) angezeigte - (jetzt Gegen-)Vorschlag 6 angenommen/fixiert 24 werden (und gilt - so bestätigt 23 - als erkannte (Zustell-)Information 5).

Auch diese so bestätigte 23/fixierte 24 (Zustell-)Information 5 (, ist diese dann auch wieder Teil der Beispiele/Lern-/Trainingsdaten 8 und wird als solche in dem Datenspeicher 15 gespeichert) wird von System 11 (über diese weitere Benutzerschnittstelle 14) als "Systemfeedback" angezeigt 20.

Sobald eine zu erkennende (Zustell-)Information 5 fixiert 24 wurde, "überprüft" das System (nur noch) die anderen, noch nicht fixierten (Zustell-)Informationen 5 der Auswahl 4, 5 bzw. die diesbezüglichen Vorschläge 6 - und generiert neue bzw. aktualisiert gegebenenfalls diese, sind so beispielsweise bestimmte Vorschläge 6 bei einzelnen (Zustell-)Informationen 6 auf Grund von Abhängigkeiten nicht mehr möglich bzw. können ausgeschlossen werden (beispielsweise gibt es für einen "fixierten" 24 Straßennamen keine Hausnummer, wie (als am wahrscheinlichsten oder gelistet) vorgeschlagen).

Auch - wahrscheinlichste - Vorschläge 6 können so zu - weniger wahrscheinlichen (Listen-)Vorschlägen "zurückgestuft" werden bzw. umgekehrt. Auch "neue" Inkonsistenzen können auftreten, welche - nach Obigem - dann auch wieder markiert werden können.

Sobald dann alle (Zustell-)Informationen 5 der Auswahl 4, 5 derart bestätigt 23/fixiert 24 worden sind - und so ein Beispiel/Lern-/Trainingsdatum 8 generiert (, als "Systemfeedback" angezeigt) und abgespeichert worden ist, eröffnet das System 11 dem Benutzer diesen Prozess mit einem anderen Bild 3 zu wiederholen.

Auf diese Weise lassen sich - einfach, effektiv, effizient und auf schnelle und kostensparende Weise - (genügend) viele, authentische Beispiele/Lern-/Trainingsdaten bzw. "ground truth data" für das Training von "logistischen, lernenden Texterkennungssystemen" generieren -, welche wiederum, werden sie für das Training des "logistischen, lernenden Texterkennungssystems" eingesetzt, so zu einem leistungsfähigen - und zuverlässig erkennenden Texterkennungssystem bzw. Texterkennung - hier - bei Logistikprozessen führen.

Insbesondere die vorgesehene Kombination bzw. das vorgesehene Zusammenspiel bei dem Prozess bzw. dem System 11 von automatischer Texterkennung (hier wird der bzw. werden die Vorschläge generiert) und benutzerunterstütztem Auswählen (hier wird dann der bzw. einer der Vorschläge ausgewählt und so als richtig erkannter (authentischer) "Treffer" fixiert 24), führt zu einem effizienten und effektiven Generieren von - authentischen - Beispielen/Lern-/Trainingsdaten, unterliegen die fixierten Vorschläge nicht mehr einer automatischen Fehlerkennung (das heißt, sie sind authentisch) und sind schneller generierbar als durch ein reines (vorschlagfreies) "manuelles" Eingeben durch einen Benutzer.

Gerade ein mehrfaches Zusammenspiel, bei dem jedes Mal ein oder mehrere Vorschläge (automatisch) generiert - und ein oder mehrere Vorschläge (durch den Benutzer) ausgewählt bzw. fixiert 24 werden, insbesondere dann auch, wenn bereits fixierte Vorschläge (aus einem Vordurchgang/-lauf) bei der Generierung von einem oder mehreren Vorschlägen (im nachfolgenden Durchgang/-lauf) berücksichtigt werden (- und so die (nachfolgenden) Vorschläge "treffsicherer" gemacht werden können ("Abhängigkeiten untereinander bei einzelnen (Zustell-)Informationen)), kann so - in effizienter und effektiver Weise - zu (einer Vielzahl von) - authentischen - Beispielen/Lern-/Trainingsdaten führen.

Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung zu verlassen.

### Bezugszeichenliste

- 1: Benutzerunterstütztes automatisches Informations- bzw. Texterkennungsverfahren, benutzerunterstützte automatische Informations- bzw. Texterkennung
- 2: (abgestimmte) automatische Informations- bzw. Texterkennung, OCR
- 3: Bild
- 4: (ausgewählter) Teil von gezeigten Informationen bzw. (Zustell-) Informationen
- 5: (ausgewählte) (erkannte) Informationen bzw. (Zustell-) Information
- 6: (aktualisierter) (Gegen-)Vorschlag für zumindest eine zu erkennende Information bzw. (Zustell-)Information
- 7: Markierung, Rahmen
- 8: Trainingsdatum/-en
- 9: Empfängeranschrift

- 11: System zur benutzerunterstützten automatischen Informationserkennung bzw. Texterkennung (1) bei Logistikprozessen
- 12: Anzeigemittel, Bildschirm
- 13: Systemmittel, Systemsoftware, Steuersoftware
- 14: Benutzerschnittstelle, UI
- 15: Datenspeicher
- 16: Kästchen
- 17: Code
- 18: Schaltfläche

- 20: Anzeigen
- 21: Auswählen
- 22: Vorschlagen
- 23: Bestätigen
- 24: Fixieren

## Patentansprüche

1. Benutzerunterstütztes automatisches Informationserkennungsverfahren (1), insbesondere Texterkennungsverfahren (1), bei Logistikprozessen bei dem
- für zumindest einen Teil von in einem einem Benutzer anzeigbaren Bild (3), insbesondere eines Logistikgutes, gezeigten Informationen (5), insbesondere (Zustell-)Informationen (5), eine automatische Informationserkennung (2), insbesondere Texterkennung (2), durchgeführt wird,
**dadurch gekennzeichnet, dass**
- bei der für den Teil (4) der Informationen (5), insbesondere (Zustell-)Informationen (5), durchgeführten automatischen Informationserkennung (2), insbesondere Texterkennung (2), dem Benutzer zumindest ein Vorschlag (6) für zumindest eine zu erkennende Information (5), insbesondere (Zustell-)Information (5), gemacht wird.

2. Benutzerunterstütztes automatisches Informationserkennungsverfahren (1), insbesondere Texterkennungsverfahren (1), nach einem der voranstehenden Ansprüche
**dadurch gekennzeichnet, dass**
der Teil (4) von den Informationen (5), insbesondere (Zustell-)Informationen (5), für welche die automatische Informationserkennung (2), insbesondere Texterkennung (2), durchgeführt wird, automatisch ausgewählt oder von dem Benutzer ausgewählt wird ("ROI").

3. Benutzerunterstütztes automatisches Informationserkennungsverfahren (1), insbesondere Texterkennungsverfahren (1), nach einem der voranstehenden Ansprüche
**dadurch gekennzeichnet, dass**
der Vorschlag (6) dem Benutzer angezeigt wird.

4. Benutzerunterstütztes automatisches Informationserkennungsverfahren (1), insbesondere Texterkennungsverfahren (1), nach einem der voranstehenden Ansprüche
**dadurch gekennzeichnet, dass**
für den Teil (4) von den Informationen (5), insbesondere (Zustell-)Informationen (5), für welche die automatische Informationserkennung (2), insbesondere Texterkennung (2), durchgeführt wird, mehrere Vorschläge (6) für zumindest eine zu erkennende Information (5), insbesondere (Zustell-)Information (5), und/oder jeweils ein Vorschlag (6) für jeweils eine von mehreren zu erkennenden Informationen (5), insbesondere (Zustell-)Informationen (5), gemacht werden/wird.

5. Benutzerunterstütztes automatisches Informationserkennungsverfahren (1), insbesondere Texterkennungsverfahren (1), nach einem der voranstehenden Ansprüche
**dadurch gekennzeichnet, dass**
das Bild (3) und/oder der Teil (4) von den Informationen (5), insbesondere (Zustell-)Informationen (5), für welche die automatische Informationserkennung (2), insbesondere Texterkennung (2), durchgeführt wird, dem Benutzer angezeigt wird und dabei der Teil (4) von den Informationen (5), insbesondere (Zustell-)Informationen (5), für welche die automatische Informationserkennung (2), insbesondere Texterkennung (2), durchgeführt wird, zumindest teilweise markiert, insbesondere unter Verwendung einer Farbmarkierung und/oder eines Rahmens (7) markiert, wird ("ROI"), insbesondere von dem Benutzer oder automatisch markiert wird.

6. Benutzerunterstütztes automatisches Informationserkennungsverfahren (1), insbesondere Texterkennungsverfahren (1), nach einem der voranstehenden Ansprüche, insbesondere nach Anspruch 4,
**dadurch gekennzeichnet, dass**
der Vorschlag (6), insbesondere ein Vorschlag (6) von mehreren Vorschlägen (6), von dem Benutzer ausgewählt wird, welcher dann als erkannte Information (5), insbesondere (Zustell-)Information (5), von der automatischen Informationserkennung (2), insbesondere Texterkennung (2), weiterverwendet wird, oder dass der Vorschlag (6), insbesondere ein Vorschlag (6) von mehreren Vorschlägen (6), von dem Benutzer abgelehnt und von dem Benutzer ein Gegenvorschlag (6) gemacht wird, welcher dann als erkannte Information (5), insbesondere (Zustell-)Information (5), von der automatischen Informationserkennung (2), insbesondere Texterkennung (2), weiterverwendet wird.

7. Benutzerunterstütztes automatisches Informationserkennungsverfahren (1), insbesondere Texterkennungsverfahren (1), nach dem voranstehenden Anspruch
**dadurch gekennzeichnet, dass**
wenn der Vorschlag (6), insbesondere ein Vorschlag (6) von mehreren Vorschlägen (6), von dem Benutzer ausgewählt worden ist, oder , wenn der Gegenvorschlag (6) von dem Benutzer gemacht worden ist, ein oder mehrere weitere, insbesondere aktualisierte, Vorschläge (6) für zumindest eine zu erkennende Information (5), insbesondere (Zustell-)Information (5), gemacht wird/werden, wobei insbesondere der oder zumindest einer der mehreren aktualisierten Vorschläge (6) in Abhängigkeit des von dem Benutzer ausgewählten Vorschlags (6) oder des von dem Benutzer gemachten Gegenvorschlags (6) generiert wird.

8. Benutzerunterstütztes automatisches Informationserkennungsverfahren (1), insbesondere Texterkennungsverfahren (1), nach Anspruch 4
**dadurch gekennzeichnet, dass**
zumindest ein Vorschlag (6) von den mehreren Vorschlägen (6) zumindest auch in Abhängigkeit von mindestens einem anderen von den mehreren Vorschlägen (6) generiert wird.

9. Benutzerunterstütztes automatisches Informationserkennungsverfahren (1), insbesondere Texterkennungsverfahren (1), nach einem der voranstehenden Ansprüche
**dadurch gekennzeichnet, dass**
die durchgeführte automatische Informationserkennung (2), insbesondere Texterkennung (2), eine auf einen zu erkennenden Informationsinhalt, insbesondere Textinhalt, abgestimmte Informationserkennung (2), insbesondere Texterkennung (2), ist.

10. Benutzerunterstütztes automatisches Informationserkennungsverfahren (1), insbesondere Texterkennungsverfahren (1), nach Anspruch 4
**dadurch gekennzeichnet, dass**
die Vorschläge (6) nach einem vorgebbaren Kriterium sortiert werden.

11. Benutzerunterstütztes automatisches Informationserkennungsverfahren (1), insbesondere Texterkennungsverfahren (1), nach einem der voranstehenden Ansprüche
**dadurch gekennzeichnet, dass**
der Benutzer das Bild (3) des Logistikgutes auswählt und/oder das Bild (3) angezeigt wird.

12. Benutzerunterstützter Informationserkennungsprozess, insbesondere Texterkennungsprozess,
bei dem
das benutzerunterstützte automatische Informationserkennungsverfahren (1), insbesondere Texterkennungsverfahren (1), nach einem der voranstehenden Ansprüche mehrfach hintereinander ausgeführt wird, wobei jedes Mal zumindest ein, insbesondere aktualisierter, Vorschlag (6) für zumindest eine zu erkennende Information (5), insbesondere (Zustell-)Information (5), gemacht wird, der, insbesondere aktualisierte, Vorschlag (6) der nachfolgenden Durchführung in Abhängigkeit des, insbesondere aktualisierten, Vorschlags (6) der vorangegangenen Durchführung generiert wird ("circular process"/"loop").

13. System (11) zur benutzerunterstützten automatischen Informationserkennung (1), insbesondere Texterkennung (1), bei Logistikprozessen mit einer automatischen Informationserkennung (2), insbesondere Texterkennung (2), durchführbar bei einem Bild (3) und insbesondere mit einem Anzeigemittel (12) zum Anzeigen eines Bildes (3)
**dadurch gekennzeichnet, dass**
ein Systemmittel (13) zur Durchführung der benutzerunterstützten automatischen Informationserkennung (1), insbesondere Texterkennung (1), bei Logistikprozessen derart eingerichtet ist, dass für zumindest einen Teil (4) von in einem einem Benutzer anzeigbaren Bild (3), insbesondere eines Logistikgutes, gezeigten Informationen (5), insbesondere (Zustell-)Informationen (5), eine automatische Informationserkennung (2), insbesondere Texterkennung (2), durchgeführt wird, wobei bei der für den Teil (4) der Informationen (5), insbesondere (Zustell-)Informationen (5), durchgeführten automatischen Informationserkennung (2), insbesondere Texterkennung (2), dem Benutzer zumindest ein Vorschlag (6) für zumindest eine zu erkennende Information (5), insbesondere (Zustell-)Information (5), gemacht wird.

14. System (11) zur benutzerunterstützten automatischen Informationserkennung (1), insbesondere Texterkennung (1), nach dem voranstehenden Anspruch,
**gekennzeichnet durch**
eine Benutzerschnittstelle (14), unter Verwendung derer der Benutzer den Vorschlag (6) annehmen oder ablehnen und einen Gegenvorschlag (6) machen kann und/oder
einen Datenspeicher (15), in welchen ein von dem Benutzer angenommener Vorschlag (6) speicherbar ist.

15. Verwendung des Systems (11) zur benutzerunterstützten automatischen Informationserkennung (1), insbesondere Texterkennung (1), nach einem der voranstehenden Systemansprüche und/oder des benutzerunterstützten automatischen Informationserkennungsverfahren (1), insbesondere Texterkennungsverfahrens (1), nach einem der voranstehenden Informationserkennungsverfahrensansprüche, insbesondere Texterkennungsverfahrensansprüche, für die Generierung von Trainingsdaten (8) ("ground truth data") für eine lernende Informationserkennung, insbesondere Texterkennung, wobei ein von dem Benutzer ausgewählter Vorschlag (6) ein Teil eines Trainingsdatums (8) ist.
